# EUROPÄISCHE PATENTSCHRIFT

(11) **EP 3 597 387 B1**
(45) Veröffentlichungstag und Bekanntmachung des Hinweises auf die Patenterteilung: **10.08.2022**
(21) Anmeldenummer: 19179842.0
(22) Anmeldetag: 13.06.2019
(51) Int. Cl.: B29B 7/72, B29B 7/42, B29C 48/00, B29C 48/92, G01B 7/14, G01B 17/00, B29B 7/28, B29B 7/74

(54) **VORRICHTUNG ZUM MISCHEN VON KAUTSCHUKMISCHUNGEN MIT ÜBERWACHUNGSSENSOR FÜR MISCHWERKZEUGSTEGE, VERWENDUNG EINES SENSORS ZUR ÜBERWACHUNG EINES ABSTANDES ZWISCHEN EINEM MISCHWERKZEUGSTEG UND DER INNENWAND EINES VORRICHTUNGSGEHÄUSES SOWIE VERFAHREN ZUR ÜBERWACHUNG EINES ABSTANDES ZWISCHEN EINEM MISCHWERKZEUGSTEG UND DER INNENWAND EINES VORRICHTUNGSGEHÄUSES**
DEVICE FOR MIXING RUBBER COMPOSITIONS WITH MONITORING SENSOR FOR MIXING TOOL BARS, USE OF A SENSOR FOR MONITORING A DISTANCE BETWEEN A MIXING TOOL BAR AND THE INNER WALL OF A HOUSING, AND METHOD FOR MONITORING A DISTANCE BETWEEN A MIXING TOOL BAR AND THE INNER WALL OF A HOUSING
DISPOSITIF DE MÉLANGE DES MÉLANGES DE CAOUTCHOUC DOTÉ D'UN CAPTEUR DE SURVEILLANCE POUR TIGE D'OUTIL MÉLANGEUR, UTILISATION D'UN CAPTEUR POUR SURVEILLER UNE DISTANCE ENTRE UNE TIGE D'OUTIL MÉLANGEUR ET LA PAROI INTÉRIEURE D'UN BOÎTIER DE DISPOSITIF AINSI QUE PROCÉDÉ DE SURVEILLANCE D'UNE DISTANCE ENTRE ENTRE UNE TIGE D'OUTIL MÉLANGEUR ET LA PAROI INTÉRIEURE D'UN BOÎTIER DE DISPOSITIF

(30) Priorität: 19.07.2018 DE 102018212078
(43) Veröffentlichungstag der Anmeldung: 22.01.2020
(73) Patentinhaber: Continental Reifen Deutschland GmbH, 30165 Hannover (DE)
(72) Erfinder: Reinhardt, Thomas, 30165 Hannover (DE)
(74) Vertreter: Continental Corporation

(56) Entgegenhaltungen:
- DE-A1-102016 215 167
- JP-A- 2019 093 586
- JP-B2- 3 819 318
- US-A- 4 066 949
- US-A- 4 604 251
- US-A1- 2006 112 755
- US-A1- 2018 224 265

## Beschreibung

Die Erfindung betrifft eine Vorrichtung zum Mischen von Kautschukmischungen, umfassend mindestens ein Mischwerkzeug mit mindestens einem Mischwerkzeugsteg und mit einer Werkzeugachse und mindestens ein Vorrichtungsgehäuse mit Innenwand. Die Erfindung betrifft zudem sowohl die Verwendung mindestens eines Sensors zur Überwachung eines Abstandes zwischen einem Mischwerkzeugsteg oder mindestens einem Mischwerkzeugsteg der mindestens einen Mischwerkzeugstege und der Innenwand eines Vorrichtungsgehäuses als auch ein Verfahren zur Überwachung eines Abstandes zwischen einem Mischwerkzeugsteg oder mindestens einem Mischwerkzeugsteg der mindestens einen Mischwerkzeugstege und der Innenwand eines Vorrichtungsgehäuses.

In der kautschukverarbeitenden Industrie werden verschiedene Anforderungen an die Hersteller gestellt. Zwei besonders wichtige Anforderungen sind hierbei eine ausreichende Qualität des hergestellten Gummis in dem jeweiligen Gummiartikel und eine ausreichende Produktionsgeschwindigkeit der Gummiartikel. Häufig wird jedoch beobachtet, dass die Qualität des Gummis mit der zunehmenden Abnutzung des Herstellungsequipment abnimmt. Dies führt dazu, dass durch die zunehmende Abnutzung einer entsprechenden Herstellungsanlage häufiger stillgelegt werden muss, um den Ursprung der verschlechterten Qualität des Gummis feststellen zu können. Ein frühes Erkennen des Ursprungs ist daher von besonderer Bedeutung.

Eine Aufgabe, die der Erfindung zugrunde liegt, besteht darin, eine Vorrichtung oder ein Verfahren bereitzustellen, die bzw. das eine konstante Qualität der Vermischung einer Kautschukmischung ermöglicht und/oder Stillstandzeiten verkürzt.

Im Stand der Technik ist bekannt:
WO 2016079783 A1 offenbart einen "Mischer mit einem Paar von Rotoren, die mit einem Zwischenraum dazwischen angeordnet sind, einem Gehäuse, in dem eine Kammer, in welcher das Paar von Rotoren angeordnet ist, ein Einführanschluss zum Einführen eines zu mischenden Materials in die Kammer, und ein Austraganschluss zum Austragen des zu mischenden Materials aus der Kammer ausgebildet sind, einem Sensor, der über dem Paar von Rotoren angeordnet ist und eine Variation der Position oder des Drucks des zu mischenden Materials erfasst, und einer Steuereinheit, die eine Rotation des Paars von Rotoren basierend auf einem Erfassungsergebnis des Sensors steuert." (s. Anspruch 1).

Aus der JP 3 819318 B2 ist ein Messverfahren für ein Durchbiegen der Schnecke eines Schneckenextruders offenbart, mit dem die Abriebmenge der vorderen Endfläche eines Schneckenblatts und der inneren Umfangsfläche eines Zylinderlochs abgeschätzt werden kann, ohne dieses aus der Schnecke herausziehen zu müssen.

Ferner ist aus der US 2006/112755 A1 eine Vorrichtung und ein Verfahren zum Bestimmen des Verschleißes einer Kombination aus Förderschnecke und Zylinder bekannt, umfassend das Messen des Verschleißes des Zylinders unter Verwendung eines Messstopfens in einer Messöffnung im Zylinder oder eines Ultraschall-Dickenmessers und das Messen des Verschleißes der Förderschnecke mit einem Wirbelstromsensor oder einer montierten Messuhr in der Messöffnung.

Aus der US 4 604 251 A ist eine Vorrichtung und ein Verfahren zum Anzeigen von Verschleiß oder Fehlausrichtung zwischen einer Schnecke und einem Zylinder in einer Kunststoffmaterialzuführung bekannt, umfassend das Ausbilden einer Öffnung in einer Seitenwand des Zylinders und das Positionieren einer Näherungserfassungssonde in der Öffnung.

Gelöst wird diese Aufgabe erfindungsgemäß durch eine Vorrichtung nach Anspruch 1 zum Mischen von Kautschukmischungen, umfassend
- mindestens ein Mischwerkzeug mit mindestens einem Mischwerkzeugsteg und mit einer Werkzeugachse
und
- mindestens ein Vorrichtungsgehäuse mit Innenwand,
dadurch gekennzeichnet, dass
das eine Vorrichtungsgehäuse mindestens einen Sensor zur Überwachung eines Abstandes zwischen einem Mischwerkzeugsteg oder mindestens einem Mischwerkzeugsteg der mindestens einen Mischwerkzeugstege und der Innenwand des Vorrichtungsgehäuses umfasst.

Für eine ausreichend gute Qualität des hergestellten Gummis muss eine homogene Vermischung der Kautschukmischung im Mischer und/oder im Extruder gewährleistet werden. Ohne eine entsprechende homogene Vermischung kann es innerhalb der extrudierten oder gemischten Kautschukmischung zu Stellen mit verschiedener Materialzusammensetzungen kommen, wobei beispielsweise aufgrund der inhomogenen Vermischung an einer Stelle zu viel und einer anderen Stelle zu wenig eines bestimmten Bestandteils der Materialzusammensetzung vorliegt. Überraschenderweise wurde in eigenen Untersuchungen festgestellt, dass in homogene Vermischung besonders häufig dann auftreten, wenn der Abstand zwischen den Mischwerkzeugstegen und dem Vorrichtungsgehäuse einer erfindungsmäßen Vorrichtung einen gewissen Mindestabstand überschreiten. Bei Überschreiten dieses Mindestabstandes kann es nämlich vorkommen, dass ein Teil der Kautschukmischung zwischen dem Vorrichtungsgehäuse eines Mischers oder eines Extruders und dem jeweiligen Mischwerkzeug, wie beispielsweise einem Rotor oder eine Extruderschnecke, vorbeigeschoben wird, ohne dass der entsprechende Teil der Kautschukmischung dabei ausreichend gemischt wird. Es ist daher von übergeordneter Bedeutung den aufgrund der Abnutzung größer werdenden Abstand zwischen einem Mischwerkzeugsteg oder mindestens einem Mischwerkzeugsteg der mindestens einen Mischwerkzeugstege und der Innenwand des Vorrichtungsgehäuses zu messen und bevorzugt ausreichend genau zu messen.

Bevorzugt ist daher eine erfindungsgemäße Vorrichtung wie vorstehend beschrieben, wobei der Sensor dazu geeignet ist, einen Mindestabstand zwischen dem Mischwerkzeugsteg oder mindestens einem Mischwerkzeugsteg der mindestens einen Mischwerkzeugstege und der Innenwand des Vorrichtungsgehäuses von mindestens 10 cm zu messen, bevorzugt mindestens 5 cm, besonders bevorzugt mindestens 1 cm, ganz besonders bevorzugt mindestens 0,1 cm. Sensoren, die dazu geeignet sind einen vorstehend beschriebenen Mindestabstand zu messen, sind insbesondere nachstehend beschriebene berührungslose Sensoren, beispielsweise Ultraschallsensoren oder Wirbelstromsensoren. Im Rahmen der vorliegenden Erfindung umfasst der Ausdruck "Mischen einer Kautschukmischung" auch Extrudieren einer Kautschukmischung.

Die erfindungsgemässe Vorrichtung umfasst mindestens zwei oder bevorzugt mindestens vier oder drei, vier, fünf, sechs, sieben, acht, neun, zehn, elf oder zwölf Sensoren zur Überwachung eines Abstandes zwischen dem Mischwerkzeugsteg oder mindestens einem Mischwerkzeugsteg der mindestens einen Mischwerkzeugstege und der Innenwand des Vorrichtungsgehäuses.

Bevorzugt ist daher auch eine erfindungsgemäße Vorrichtung wie vorstehend beschrieben oder wie vorstehend als bevorzugt beschrieben, wobei die Vorrichtung zusätzlich eine Steuer- und/oder Regeleinheit mit oder ohne einer Recheneinheit umfasst, welche dazu ausgelegt ist, das Überschreiten eines von einem Sensor gemessenen Mindestabstandes zwischen dem Mischwerkzeugsteg oder mindestens einem Mischwerkzeugsteg der mindestens einen Mischwerkzeugstege und der Innenwand des Vorrichtungsgehäuses zu signalisieren, insbesondere eines Mindestabstandes wie vorstehend beschrieben.

Erfindungsgemäss ist der eine Mischwerkzeugsteg des einen Mischwerkzeuges
- ein Mischwerkzeugsteg des einen oder eines letzten Mischwerkzeugs vor der Auswurföffnung einer erfindungsmäßen Vorrichtung
oder
- der letzte Mischwerkzeugsteg vor der Auswurföffnung einer erfindungsmäßen Vorrichtung, bevorzugt ist der eine Mischwerkzeugsteg des einen Mischwerkzeuges der letzte Mischwerkzeugsteg des letzten Mischwerkzeugs oder der letzten Mischwerkzeuge der mindestens einen Mischwerkzeugs vor der Auswurföffnung einer erfindungsmäßen Vorrichtung.

Im Rahmen eigener Untersuchungen wurde festgestellt, dass insbesondere bei einer Verkürzung der Mischwerkzeugsteg des letzten Mischwerkzeugs vor der Auswurföffnung eines Mischers oder eines Extruders Qualitätsprobleme aufgrund unzureichender Vermischung auftreten. Dies führt demzufolge auch zu besonders häufigen und unerwünschten Stilllegungen.

Ein Vorteil des vorstehend beschriebenen Aspekts der vorliegenden Erfindung ist, dass eine noch konstantere Qualität der hergestellten Kautschukmischung gewährleistet werden kann, wenn der entsprechende Abstand des einen oder des mindestens einen Mischwerkzeugstegs des letzten Mischwerkzeugs vor der Auswurföffnung einer erfindungsmäßen Vorrichtung durch einen vorstehend oder nachstehend beschriebenen Sensor überwacht wird.

Im Rahmen der vorliegenden Erfindung ist das letzte Mischwerkzeug vor der Auswurföffnung einer erfindungsmäßen Vorrichtung das Mischwerkzeug, dessen Werkzeugachse den geringsten Abstand zum geometrischen Mittelpunkt der Auswurföffnung der Vorrichtung aufweist. Weisen mehrere Werkzeugachse verschiedener Mischwerkzeuge den gleichen Abstand zum geometrischen Mittelpunkt der Auswurföffnung der Vorrichtung auf, so sind sämtliche dieser Mischwerkzeuge im Rahmen der vorliegenden Erfindung die letzte Mischwerkzeuge vor der Auswurföffnung einer erfindungsgemäßen Vorrichtung.

Im Rahmen der vorliegenden Erfindung ist der letzte Mischwerkzeugsteg, welcher in Mischrichtung oder in Extrusionsrichtung vor der Auswurföffnung einer erfindungsmäßen Vorrichtung liegt, der Mischwerkzeugsteg, dessen geometrischer Mittelpunkt den geringsten Abstand zum geometrischen Mittelpunkt der Auswurföffnung der Vorrichtung aufweist. Weisen mehrere geometrische Mittelpunkte verschiedener Mischwerkzeugstege den gleichen Abstand zum geometrischen Mittelpunkt der Auswurföffnung der Vorrichtung auf, so sind sämtliche dieser Mischwerkzeugstege im Rahmen der vorliegenden Erfindung die letzten Mischwerkzeugstege, welcher in Mischrichtung oder in Extrusionsrichtung vor der Auswurföffnung einer erfindungsgemäßen Vorrichtung.

Im Rahmen der vorliegenden Erfindung ist die Mischrichtung bevorzugt von der Einwurföffnung zu der Auswurföffnung.

Bevorzugt ist eine Vorrichtung wie vorstehend beschrieben oder wie vorstehend als bevorzugt beschrieben, wobei die Vorrichtung eine Zahnrad-Pumpe mit mindestens einem Mischzahn eines Zahnrads, ein Extruder mit mindestens einem Schneckensteg einer Extruderschnecke oder ein Mischer mit mindestens einem Rotorsteg eines Rotors ist, bevorzugt ein Extruder mit mindestens einem Schneckensteg einer Extruderschnecke oder ein Mischer mit mindestens einem Rotorsteg eines Rotors, besonders bevorzugt ein Extruder mit mindestens einem Schneckensteg einer Extruderschnecke.

Falls die erfindungsmäße Vorrichtung ein Mischer, insbesondere ein Ein-Kammer-Mischer, ist, ist
das eine Mischwerkzeug oder das mindestens eine Mischwerkzeug
- ein Rotor mit mindestens einem Rotorsteg und mit einer Rotorachse und das mindestens eine Vorrichtungsgehäuse
- ein Mischergehäuse.
Falls die erfindungsmäße Vorrichtung ein Tandemmischer ist,
ist das eine Mischwerkzeug oder das mindestens eine Mischwerkzeug
- ein Rotor mit mindestens einem Rotorsteg und mit einer Rotorachse und umfasst das mindestens eine Vorrichtungsgehäuse
- ein Obermischergehäuse und ein Untermischergehäuse
und die letzten Rotoren in Mischrichtung vor der Auswurföffnung des Untermischergehäuses des Tandemmischers sind
- die Rotoren des Untermischergehäuses
und die letzten Rotorstege
- die Rotorstege der Rotoren des Untermischergehäuses.

Bei Tandemmischer ist das Überwachen der Rotorstege des Untermischergehäuses besonders wichtig, da hier das finale Mischen, insbesondere das Mischen mit den Vulkanisationschemikalien, stattfindet und sich somit eine unzureichende Vermischung der Materialbestandteile der Kautschukmischung besonders nachteilig auf die Qualität der resultierenden Kautschukmischung auswirkt.

Falls die erfindungsmäße Vorrichtung ein Extruder ist, ist
die erfindungsgemäße Vorrichtung
- eine Vorrichtung zum Extrudieren einer Kautschukmischung
und das eine Mischwerkzeug oder das mindestens eine Mischwerkzeug
- eine Schnecke mit mindestens einem Schneckensteg und mit einer Schneckenachse und das mindestens eine Vorrichtungsgehäuse
- ein Extruderzylinder.

Bei Extrudern ist die Überwachung des Abstandes zwischen den Schneckenstegen und dem Extruderzylinder besonders wichtig, da bei einem zu großen vorstehend beschriebenen Abstand nicht nur die Qualität der Kautschukmischung leiden kann, sondern insbesondere auch die Temperaturkontrolle verloren geht. Letzteres liegt daran, dass die Temperatur der Kautschukmischung durch die in einem Extruder auftretenden Scherkräfte zwischen den Mischungsbestandteilen bestimmt wird. Die Qualität des Extrudats eines Extruders als Beispiel einer erfindungsmäßen Vorrichtung wird daher aufgrund dieses besonders vorteilhaften Effektes der vorliegenden Erfindung in besonders hohem Maße verbessert.

Ein besonderer Vorteil der vor- oder nachstehend beschriebenen Sensoren bei erfindungsgemäßen Extrudern in Kombination mit dem vorstehend beschriebenen Aspekt zum letzten Mischwerkzeugsteg wie vorstehend beschrieben ist, dass unter realistischen Produktionsbedingungen in einem Extruder die letzten Schneckenstege an dem Schneckenkopf der Extruderschnecke überraschenderweise besonders schnell abnutzen und es somit besonders häufig zu Stilllegungen kommt. Im Rahmen eigener Untersuchungen wurde ermittelt, dass unter realistischen Produktionsbedingungen die Extruderschnecke nicht eine Rotation um die ideale Drehachse ausführt, sondern die Rotation der Extruderschnecke kegelartig ist, da die Schnecke an einem Ende bei der Einfüllöffnung des Extruders eingespannt ist und am anderen Ende, also am Schneckenkopfes, nicht eingespannt ist und somit von der idealen Drehachse abweisen kann.

Falls die erfindungsmäße Vorrichtung eine Zahnrad-Pumpe ist,
ist das eine Mischwerkzeug oder das mindestens eine Mischwerkzeug
- ein Zahnrad mit mindestens einem Zahnradsteg und mit einer Zahnradachse und umfasst das mindestens eine Vorrichtungsgehäuse
- ein Pumpengehäuse.

Bevorzugt ist eine Vorrichtung wie vorstehend beschrieben oder wie vorstehend als bevorzugt beschrieben, wobei der eine Sensor zur Überwachung eines Abstandes zwischen dem Mischwerkzeugsteg oder mindestens einem Mischwerkzeugsteg der mindestens einen Mischwerkzeugstege und der Innenwand des Vorrichtungsgehäuses ein berührungsloser Sensor ist, bevorzugt ein Ultraschallsensor oder ein Wirbelstromsensor ist.

Ein Vorteil des vorstehend beschriebenen Aspekts der vorliegenden Erfindung ist, dass berührungsloser Sensoren wie Ultraschallsensoren oder Wirbelstromsensoren die vorstehende Aufgabe der vorliegenden Erfindung lösen können, ohne die Kautschukmischung oder den Mischvorgang oder das Extrudieren negativ zu beeinflussen. Ultraschallsensoren und Wirbelstromsensoren haben dazu die Vorteile, dass sie besonders einfach in eine erfindungsgemäße Vorrichtung eingebaut werden können, beispielsweise durch eine zusätzliche Bohrungen in das Vorrichtungsgehäuse, und dass sie ausreichend genau sind, um die vorstehend beschriebene Aufgabe der vorliegenden Erfindung zu lösen.

Bevorzugt ist eine Vorrichtung wie vorstehend beschrieben oder wie vorstehend als bevorzugt beschrieben, wobei das eine Vorrichtungsgehäuse vier Sensoren zur Überwachung eines Abstandes zwischen dem Mischwerkzeugsteg oder mindestens einem Mischwerkzeugsteg der mindestens einen Mischwerkzeugstege und der Innenwand des Vorrichtungsgehäuses umfasst, wobei bevorzugt die vier Sensoren um die Werkzeugachse, besonders bevorzugt rotationssymmetrisch, angeordnet sind und/oder einer der vier Sensoren jeweils eine im Vergleich zu seinen benachbarten Sensoren um 90° gedrehte Messrichtung aufweist. Bevorzugt gilt dies, wenn die erfindungsgemäße Vorrichtung ein Extruder oder ein Mischer ist, besonders bevorzugt ein Extruder ist.

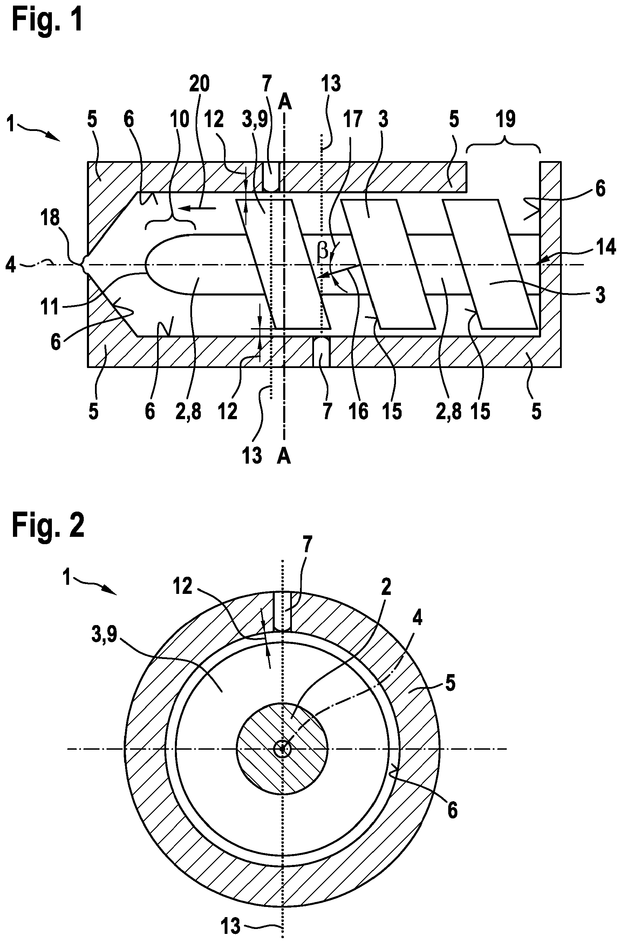

Ein Vorteil des vorstehend beschriebenen Aspekts der vorliegenden Erfindung ist, dass mehrere Abstände in derselben zur Drehachse vertikalen Ebene oder in unterschiedlichen zur Drehachse vertikalen Ebenen untersucht werden können. Die genannte Drehachse ist hierbei die ideale Drehachse der Werkzeugachse, wie sie auch in der Figur 1 dargestellt ist.

Im Rahmen der vorliegenden Erfindung ist eine zur Drehachse vertikale Ebene eine Ebene, in der jeder Normalvektor der vertikalen Ebene, d.h. unabhängig an welcher Stelle in der vertikalen Ebene sich der Normalvektor sich befindet, parallel zur Werkzeugachse verläuft.

Bevorzugt ist eine Vorrichtung wie vorstehend beschrieben oder wie vorstehend als bevorzugt beschrieben, wobei ein Normalvektor einer Fläche eines Mischwerkzeugstegs des Mischwerkzeuges einen Winkel ß im Bereich von 10° bis 30° mit der Werkzeugachse des Mischwerkzeuges aufspannt. Besonders bevorzugt ist eine Vorrichtung wie vorstehend beschrieben oder wie vorstehend als bevorzugt beschrieben, wobei der Normalvektor am geometrischen Mittelpunkt einer Fläche oder beider Flächen des einen Mischwerkzeugstegs des Mischwerkzeuges einen Winkel ß im Bereich von 10° bis 30° mit der Werkzeugachse des Mischwerkzeuges aufspannt.

Bevorzugt gelten die vorstehend beschriebenen Aspekte zu einem Winkel ß des Normalvektors des Mischwerkzeuges, wenn die erfindungsgemäße Vorrichtung ein Extruder oder ein Mischer ist.

Im Rahmen der vorliegenden Erfindung ist eine Fläche eines Mischwerkzeugstegs des Mischwerkzeuges die Hauptfläche des Mischwerkzeugstegs, welche die Kautschukmischung in Misch- oder Extrusionsrichtung bewegt.

Bevorzugt ist eine Vorrichtung wie vorstehend beschrieben oder wie vorstehend als bevorzugt beschrieben, wobei die Messachsen der vier Sensoren jeweils senkrecht zur Werkzeugachse angeordnet sind und im Vergleich zu dem jeweils benachbarten Sensor sukzessiv um mindestens 1 cm verschoben sind, d.h. dass die vier Messachsen der vier Sensoren in vier unterschiedlichen zur Drehachse vertikalen Ebenen liegen und die vier unterschiedlichen zur Drehachse vertikalen Ebenen jeweils mindestens 1 cm zur benachbarten vertikalen Ebene verschoben sind. Bevorzugt sind sie mindestens um 5 cm verschoben, besonders bevorzugt um mindestens 10 cm, ganz besonders bevorzugt um mindestens 20 cm.

Bevorzugt gelten die vorstehend beschriebenen Aspekte zu den Messachsen in den verschiedenen vertikalen Ebenen, wenn die erfindungsgemäße Vorrichtung ein Extruder oder ein Mischer ist.

Vorteilhaft ist hierbei, dass die versetzten Mischwerkzeuge von Mischern und Extrudern effizienter mit einer kleinen Anzahl von vier Sensoren gemessen werden können.

Bevorzugt ist eine Vorrichtung wie vorstehend beschrieben oder wie vorstehend als bevorzugt beschrieben, wobei die Vorrichtung ein Extruder mit mindestens einem Schneckensteg einer Extruderschnecke ist, wobei der eine Sensor oder einer der mindestens einen Sensoren oder die vier Sensoren oder sämtliche der mindestens einen Sensoren
- am Schneckenkopf der Extruderschnecke angeordnet sind und/oder
- höchstens 50 cm von der Spitze des Schneckenkopfes entfernt angeordnet ist, bevorzugt höchstens 20 cm und bevorzugt mindestens 5 cm.

Im Rahmen eigener Untersuchungen wurde festgestellt, dass insbesondere bei einer Verkürzung eines Schneckensteges der Extruder vor dem Schneckenkopf einer erfindungsmäßen Vorrichtung Qualitätsprobleme aufgrund unzureichender Vermischung auftreten. Dies führt demzufolge auch zu besonders häufigen und unerwünschten Stilllegungen des Extruders.

Ein Vorteil des vorstehend beschriebenen Aspekts der vorliegenden Erfindung ist, dass eine noch konstantere Qualität der hergestellten Kautschukmischung gewährleistet werden kann, wenn der entsprechende Abstand des einen oder des mindestens einen Schneckensteges vor dem Schneckenkopf einer erfindungsmäßen Vorrichtung durch einen vorstehend oder nachstehend beschriebenen Sensor überwacht wird.

In besonders hohem Maße bevorzugt ist eine Vorrichtung wie vorstehend beschrieben, umfassend:
- mindestens ein Mischwerkzeug mit mindestens einem Mischwerkzeugsteg und mit einer Werkzeugachse
und
- mindestens ein Vorrichtungsgehäuse mit Innenwand,
dadurch gekennzeichnet, dass
das eine Vorrichtungsgehäuse mindestens vier Sensoren zur Überwachung eines Abstandes zwischen dem Mischwerkzeugsteg oder mindestens einem Mischwerkzeugsteg der mindestens einen Mischwerkzeugstege und der Innenwand des Vorrichtungsgehäuses umfasst,
wobei
- die Vorrichtung eine Zahnrad-Pumpe mit mindestens einem Mischzahn eines Zahnrads ist,
- die vier Sensoren Wirbelstromsensoren sind,
- die vier Sensoren um die Zahnradachse der Zahnrad-Pumpe angeordnet sind und einer der vier Sensoren jeweils eine im Vergleich zu seinen benachbarten Sensoren um 90° gedrehte Messrichtung aufweist
und
- die Messachsen der vier Sensoren jeweils senkrecht zur Zahnradachse der Zahnrad-Pumpe angeordnet sind.

In besonders hohem Maße bevorzugt ist eine Vorrichtung wie vorstehend beschrieben, umfassend:
- mindestens ein Mischwerkzeug mit mindestens einem Mischwerkzeugsteg und mit einer Werkzeugachse
und
- mindestens ein Vorrichtungsgehäuse mit Innenwand,
dadurch gekennzeichnet, dass
das eine Vorrichtungsgehäuse mindestens vier Sensoren zur Überwachung eines Abstandes zwischen dem Mischwerkzeugsteg oder mindestens einem Mischwerkzeugsteg der mindestens einen Mischwerkzeugstege und der Innenwand des Vorrichtungsgehäuses umfasst,
wobei
- die Vorrichtung ein Extruder mit mindestens einem Schneckensteg einer Extruderschnecke ist,
- die vier Sensoren Wirbelstromsensoren sind,
- die vier Sensoren um die Schneckenachse angeordnet sind und einer der vier Sensoren jeweils eine im Vergleich zu seinen benachbarten Sensoren um 90° gedrehte Messrichtung aufweist,
- die Messachsen der vier Sensoren jeweils senkrecht zur Schneckenachse angeordnet sind und im Vergleich zu dem jeweils benachbarten Sensor sukzessiv um mindestens 1 cm verschoben sind,
- ein Normalvektor einer Fläche eines Schneckenstegs der Extruderschnecke einen Winkel ß im Bereich von 10° bis 30° mit der Schneckenachse der Extruderschnecke aufspannt
und
- die vier Sensoren 50 cm bis 5 cm von der Spitze des Schneckenkopfes entfernt angeordnet sind.

In besonders hohem Maße bevorzugt ist eine Vorrichtung wie vorstehend beschrieben, umfassend:
- mindestens ein Mischwerkzeug mit mindestens einem Mischwerkzeugsteg und mit einer Werkzeugachse
und
- mindestens ein Vorrichtungsgehäuse mit Innenwand,
dadurch gekennzeichnet, dass
das eine Vorrichtungsgehäuse mindestens vier Sensoren zur Überwachung eines Abstandes zwischen dem Mischwerkzeugsteg oder mindestens einem Mischwerkzeugsteg der mindestens einen Mischwerkzeugstege und der Innenwand des Vorrichtungsgehäuses umfasst,
wobei
- die Vorrichtung ein Mischer mit mindestens einem Rotorsteg eines Rotors ist,
- die vier Sensoren Wirbelstromsensoren sind,
- die vier Sensoren um die Rotorachse angeordnet sind und einer der vier Sensoren jeweils eine im Vergleich zu seinen benachbarten Sensoren um 90° gedrehte Messrichtung aufweist,
- die Messachsen der vier Sensoren jeweils senkrecht zur Rotorachse angeordnet sind und im Vergleich zu dem jeweils benachbarten Sensor sukzessiv um mindestens 1 cm verschoben sind
und
- ein Normalvektor einer Fläche eines Rotorstegs des Rotors einen Winkel ß im Bereich von 10° bis 30° mit der Rotorachse des Rotors aufspannt.

Die vorstehend beschriebenen vorteilhaften Aspekte einer erfindungsgemäßen Vorrichtung zum Mischen von Kautschukmischungen gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Vorrichtung.

Die Erfindung betrifft auch eine Verwendung, nach Anspruch 6, mindestens eines Sensors zur Überwachung eines Abstandes zwischen einem Mischwerkzeugsteg oder mindestens einem Mischwerkzeugsteg der mindestens einen Mischwerkzeugstege und der Innenwand eines Vorrichtungsgehäuses, wobei der eine oder der mindestens eine Sensor ein vorstehend beschriebener Sensor oder ein Sensor einer vorstehend als bevorzugt beschriebenen Vorrichtung ist.

Die vorstehend beschriebenen vorteilhaften Aspekte
- einer erfindungsgemäßen Vorrichtung zum Mischen von Kautschukmischungen
und
- einer erfindungsgemäßen Verwendung mindestens eines Sensors zur Überwachung eines Abstandes zwischen einem Mischwerkzeugsteg oder mindestens einem Mischwerkzeugsteg der mindestens einen Mischwerkzeugstege und der Innenwand eines Vorrichtungsgehäuses
gelten auch für sämtliche Aspekte eines nachstehend beschriebenen Verfahren zur Überwachung eines Abstandes zwischen einem Mischwerkzeugsteg oder mindestens einem Mischwerkzeugsteg der mindestens einen Mischwerkzeugstege und der Innenwand eines Vorrichtungsgehäuses und die nachstehend diskutierten vorteilhaften Aspekte erfindungsgemäßer Verfahren gelten entsprechend für sämtliche Aspekte
- einer erfindungsgemäßen Vorrichtung zum Mischen von Kautschukmischungen
und
- einer erfindungsgemäßen Verwendung mindestens eines Sensors zur Überwachung eines Abstandes zwischen einem Mischwerkzeugsteg oder mindestens einem Mischwerkzeugsteg der mindestens einen Mischwerkzeugstege und der Innenwand eines Vorrichtungsgehäuses.

Die Erfindung betrifft auch ein Verfahren nach Anspruch 7 zur Überwachung eines Abstandes zwischen einem Mischwerkzeugsteg oder mindestens einem Mischwerkzeugsteg der mindestens einen Mischwerkzeugstege und der Innenwand eines Vorrichtungsgehäuses, umfassend die folgenden Schritte:
A) Bereitstellen oder Herstellen eines Mischwerkzeugs in einer Vorrichtung wie vorstehend beschrieben oder wie vorstehend als bevorzugt beschrieben,
B) Mischen einer Kautschukmischung mit dem Mischwerkzeug in dem Vorrichtungsgehäuse
   und
C) Einmaliges, mehrmaliges oder kontinuierliches Messen des Abstandes zwischen einem Mischwerkzeugsteg oder mindestens einem Mischwerkzeugsteg der mindestens einen Mischwerkzeugstege und der Innenwand des Vorrichtungsgehäuses während des Mischens einer Kautschukmischung.

Bevorzugt ist ein Verfahren wie vorstehend beschrieben, zusätzlich umfassend den folgenden Schritt:
- Installieren des Mischwerkzeugs in einem Vorrichtungsgehäuse mit einem oder mehreren Sensoren zur Überwachung eines Abstandes zwischen einem Mischwerkzeugsteg oder mindestens einem Mischwerkzeugsteg der mindestens einen Mischwerkzeugstege und der Innenwand des Vorrichtungsgehäuses.

Bevorzugt ist ein Verfahren wie vorstehend beschrieben oder wie vorstehend als bevorzugt beschrieben, zusätzlich umfassend den folgenden Schritt:
D) Ausgeben eines Signals, wenn der in Schritt C) gemessene Abstand einen Mindestabstand überschreitet, insbesondere wenn der in Schritt C) gemessene Abstand einen der Mindestabstände wie vorstehend beschrieben überschreitet.

Figurenbeschreibung:
- Figur 1:: Querschnittsansicht auf eine schematisch dargestellte erfindungsgemäße Extruder-Vorrichtung, wobei die Querschnittseben parallele zur Schneckenachse verläuft;
- Figur 2:: Querschnittsansicht auf eine schematisch dargestellte erfindungsgemäße Extruder-Vorrichtung, wobei die Querschnittsebene eine gemäß Figur 1 dargestellte Ebene A-A ist und somit senkrecht zur Schneckenachse verläuft.

Figur 1 zeigt eine schematische Darstellung einer Querschnittsansicht einer erfindungsgemäßen Vorrichtung 1 zum Mischen von Kautschukmischungen in einer ersten Ausführungsform, wobei die Querschnittsebene parallel zur Schneckenachse 4 der erfindungsgemäßen Vorrichtung 1 verläuft. Die erfindungsgemäße Vorrichtung 1, welche in Figur 1 schematisch dargestellt ist, ist ein Extruder 1. Der Extruder 1 weist dabei einen Extruderzylinder 5 als Vorrichtungsgehäuse und eine Extruderschnecke 2 als Mischwerkzeug auf. Der Extruderzylinder 5 weist hierbei eine Innenwand 6, eine Auswurföffnung 18 zum Formen des gemischten und extrudierten Extrudats und eine Einwurföffnung 19 zum Füttern des Extruders 1 auf. Die Extruderschnecke 2 weist einen Schneckenkopfes 10, welches das freie Ende der Extruderschnecke 2 darstellt, und ein eingespanntes Ende 14 auf. Zudem weist die Extruderschnecke 2 eine Spitze 11 des Schneckenkopfes 10 und drei Schneckenstege 3 auf, wobei der eine Schneckensteg 3, welcher am nächsten am Schneckenkopf 10 angeordnet ist, den letzten Schneckensteg 9 der Extruderschnecke 2 darstellt. Da der in Figur 1 gezeigte Extruder 1 einen Ein-Schnecken-Extruder darstellt, ist die eine Extruderschnecke 2 auch zugleich die letzte Extruderschnecke 8.

Die Schneckenachse der Extruderschnecke 2 dreht sich idealerweise genau um die Drehachse 4 und bildet somit eine ideale Schneckenachse 4. Da die Extruderschnecke 2 jedoch nur in ihrem eingespannten Ende 14 in Position gehalten werden kann, kommt es vor, dass die Spitze 11 des Schneckenkopfes 10 nicht in der dargestellten Drehachse 4 liegt und die Rotationsbewegung der Extruderschnecke 2 um die Drehachse 4 einer kegelartigen Bahn folgt, wobei die Spitze des Kegels der kegelartigen Bahn am eingespannten Ende 14 der Extruderschnecke 2 liegt und die Spitze 11 des Schneckenkopfes 10 dem Umfang der kreisrunden Grundfläche des Kegels der kegelartige Bahn folgt. Die vorstehend beschriebene Rotationsbewegung entlang der kegelartige Bahn der Extruderschnecke 2 führt dazu, dass der letzte Schneckensteg 9 eine schnellere Abnutzung erfährt als die restlichen Schneckenstege 3. Zudem ist der Abstand 12 zwischen dem letzten Schneckensteg 9 und der Innenwand 6 des Extruderzylinders 5 im vorstehend genannten Falle kleiner als der Abstand zwischen den anderen Schneckenstegen 3 und der Innenwand 6.

Es ist insbesondere vorteilhaft mindestens zwei oder bevorzugt vier Sensoren 7 zur Überwachung des letzten Schneckensteges 9 wie in Figur 1 dargestellt anzuordnen. Diese Anordnung der Sensoren 7 ist dabei vorteilhafterweise so, dass die Messachse 13 eines Sensors 7 senkrecht zur Drehachse 4 der Extruderschnecke 2 wie in Figur 1 dargestellt verläuft. Zudem sollte die Anordnung der Sensoren 7 vorteilhafterweise so erfolgen, dass die jeweiligen Messachsen 13 in unterschiedlichen zur Drehachse 4 vertikalen Ebenen wie in Figur 1 dargestellt liegen, um den Abstand 12 zwischen dem letzten Schneckensteg 9 und der Innenwand 6 an verschiedenen Stellen des letzten Schneckenstege 9 zu messen. Der Abstand zwischen den verschiedenen vertikalen Ebenen, in denen die jeweiligen Messachsen 13 der Sensoren 7 liegen, richtet sich einerseits nach dem Durchmesser der Hauptfläche 15 des Schneckenstege 3 und andererseits nach dem Winkel ß 17, welcher durch den Normalvektor 16 und der Hauptfläche 15 aufgespannt wird. Je größer der Durchmesser der Hauptfläche 15 und je größer der Winkel ß, desto größer muss der Abstand zwischen den vertikalen Ebenen, in welchen sich die Messachsen 13 der Sensoren 7 befinden, gewählt werden. In der schematisch dargestellten Figur 1 bis gut erkennbar, welchen Effekt es auf die Misch- und Extrusionsvorgänge innerhalb des Extruderzylinder 5 hat, wenn der Abstand 12 größer wird. Die Hauptaufgaben der Extrusion Schnecke 2 ist es eine Kautschukmischung von der Einwurföffnung 19 zur Auswurföffnung 18 zu befördern und dabei die Kautschukmischung einerseits zu mischen und andererseits auf eine gewünschte Temperatur zu bringen. Der Materialfluss der Kautschukmischung sollte dabei immer in Extrusionsrichtung 20 zu der Auswurföffnung 18 erfolgen. Vergrößert sich nun der Abstand 12 zwischen einem der Schneckenstege 3 und der Innenwand 6, so kann an dieser Stelle, also zwischen einem der Schneckenstege 3 und der Innenwand 6, ein verlangsamter Materialfluss oder sogar ein Rückfluss der Kautschukmischung in die entgegengesetzte Richtung, d.h. von der Auswurföffnung 18 weg, entstehen. Dies führt nicht nur dazu, dass sich die Extrusionsgeschwindigkeit an der Auswurföffnung 18 verlangsamt, sondern auch dazu, dass die Temperatur der Kautschukmischung innerhalb des Extruderzylinders 5 von der gewünschten Temperatur abweicht. Eine einfache Erhöhung der Drehgeschwindigkeit der Extruderschnecke 2 würde dieses Problem nicht lösen, da zum Erreichen der gewünschten Extrusionsgeschwindigkeit an der Auswurföffnung 18 häufig eine Drehgeschwindigkeit der Extruderschnecke 2 gewählt werden müsste, welche zu hohe Temperaturen der Kautschukmischung innerhalb des Extruderzylinder 5 hervorruft und somit zu einem Qualitätsverlust des resultierenden Extrudats führt.

Außerdem kann ein großer Abstand 12 dazu führen, dass ein Teil der Kautschukmischung zwischen dem letzten Schneckenstege 9 oder einem anderen Schneckensteg 3 ungewollt lange verbleibt.

Diese Effekte können enorme Auswirkungen auf die Qualität des resultierenden Extrudats bewirken. Die vorstehend beschriebenen Auswirkungen auf den Materialfluss und die daraus resultierenden Effekte zeigen sich insbesondere dann, wenn der Abstand 12 zwischen dem letzten Schneckensteg 9 und der Innenwand 6 auftreten, da an dieser Stelle ein höherer Druck in der Kautschukmischung vorliegt als an den verbleibenden Schneckenstegen 3. Es ist daher besonders wichtig unvorteilhaft im Rahmen der vorliegenden Erfindung, das der Abstand 12 zwischen der Innenwand 6 und dem letzten Schneckensteg 3 regelmäßig oder sogar kontinuierlich gemessen wird, um die Mischwerkzeugstege 3 oder Mischwerkzeuge 2 frühzeitig auszutauschen und somit daraus resultierenden Effekte zu vermeiden.

Figur 2 zeigt eine schematische Darstellung einer Querschnittsansicht einer erfindungsmäßen Vorrichtung 1 zum Mischen von Kautschukmischungen in einer weiteren Ausführungsform, wobei die Querschnittsebene eine gemäß Figur 1 dargestellte Ebene A-A ist und somit senkrecht zur Schneckenachse verläuft. Die erfindungsgemäße Vorrichtung 1, welche in Figur 1 schematisch dargestellt ist, ist ein Extruder 1. Der Extruder 1 weist dabei einen Extruderzylinder 5 mit einer Innenwand 6 als Vorrichtungsgehäuse und eine Extruderschnecke 2 als Mischwerkzeug mit einer Drehachse 4 auf. Die Extruderschnecke 2 weist zudem einen letzten Schneckensteg 9 auf. Durch den Extruderzylinder 5 ist ein Sensor 7 angeordnet, dessen Messachse 13 durch die Drehachse 4 und senkrecht zur Drehachse 4 verläuft. Der in Figur 2 schematisch dargestellte Sensor 7 misst dabei den Abstand 12 zwischen dem Sensor 7 und dem letzten Schneckenstege 9. Der Sensor 7 ist dabei ein berührungsloser Sensor 7 und ist vorteilhafterweise oberflächenbündig zur Innenwand 6 im Extruderzylinder 5 installiert.

### Bezugszeichenliste:

- 1: Vorrichtung zum Mischen von Kautschukmischungen; Extruder
- 2: Mischwerkzeug; Extruderschnecke
- 3: Mischwerkzeugsteg; Schneckensteg
- 4: Drehachse des Mischwerkzeugs; ideale Werkzeugachse; ideale Schneckenachse
- 5: Vorrichtungsgehäuse; Extruderzylinder
- 6: Innenwand des Vorrichtungsgehäuses; Innenwand des Extruderzylinders
- 7: Sensor zur Überwachung eines Abstandes zwischen einem Mischwerkzeugsteg oder mindestens einem Mischwerkzeugsteg der mindestens einen Mischwerkzeugstege und der Innenwand des Vorrichtungsgehäuses; berührungsloser Sensor; Wirbelstromsensor
- 8: letztes Mischwerkzeug; letzte Extruderschnecke
- 9: letzter Mischwerkzeugsteg; letzter Schneckensteg
- 10: Schneckenkopf; freies Ende der Extruderschnecke
- 11: Spitze des Schneckenkopfes
- 12: Abstand zwischen dem Mischwerkzeugsteg oder mindestens einem Mischwerkzeugsteg der mindestens einen Mischwerkzeugstege und der Innenwand des Vorrichtungsgehäuses; Abstand zwischen dem letzten Schneckensteg und der Innenwand des Extruderzylinders
- 13: Messachse des berührungslosen Sensor; Messachse des Wirbelstromsensors
- 14: eingespanntes Ende der Extruderschnecke
- 15: Hauptfläche oder Fläche eines Mischwerkzeugstegs; Hauptfläche oder Fläche eines Schneckenstegs
- 16: Normalvektor einer Fläche eines Mischwerkzeugstegs; Normalvektor einer Fläche eines Schneckenstegs
- 17: Winkel ß zwischen Normalvektor einer Fläche eines Mischwerkzeugstegs und der Werkzeugachse; Winkel ß zwischen Normalvektor einer Fläche eines Schneckenstegs und der Schneckenachse
- 18: Auswurföffnung
- 19: Einwurföffnung
- 20: Extrusionsrichtung
- A-A: zur Drehachse vertikale Ebene

## Patentansprüche

1. Vorrichtung zum Mischen von Kautschukmischungen, umfassend
- mindestens ein Mischwerkzeug (2) mit mindestens einem Mischwerkzeugsteg (3) und mit einer Werkzeugachse (4)
und
- ein Vorrichtungsgehäuse (5) mit Innenwand (6),
**dadurch gekennzeichnet, dass**
das eine Vorrichtungsgehäuse (5) mindestens zwei Sensoren (7) zur Überwachung eines Abstandes (12) zwischen dem einen Mischwerkzeugsteg (3) oder mindestens einem Mischwerkzeugsteg (3) der mindestens einen Mischwerkzeugstege (3) und der Innenwand (6) des Vorrichtungsgehäuses (5) umfasst, wobei die mindestens zwei Sensoren (7) um die Werkzeugachse (4) rotationssymmetrisch angeordnet sind, wobei der eine Mischwerkzeugsteg (3) des einen Mischwerkzeuges (2)
- ein Mischwerkzeugsteg (3) des letzten Mischwerkzeugs (8) vor der Auswurföffnung (18) der Vorrichtung (1)
oder
- der letzte Mischwerkzeugsteg (9) vor der Auswurföffnung (18) der Vorrichtung (1)
ist.

2. Vorrichtung nach Anspruch 1, wobei die Vorrichtung eine Zahnrad-Pumpe mit mindestens einem Mischzahn eines Zahnrads, ein Extruder (1) mit mindestens einem Schneckensteg (3) einer Extruderschnecke (2) oder ein Mischer mit mindestens einem Rotorsteg eines Rotors ist.

3. Vorrichtung nach Anspruch 1 oder 2, wobei wenigstens einer der Sensoren (7) zur Überwachung eines Abstandes (12) zwischen einem Mischwerkzeugsteg (3) oder mindestens einem Mischwerkzeugsteg (3) der mindestens einen Mischwerkzeugstege (3) und der Innenwand (6) des Vorrichtungsgehäuses (5) ein berührungsloser Sensor (7) ist, bevorzugt ein Ultraschallsensor oder ein Wirbelstromsensor ist.

4. Vorrichtung nach einem der vorangehenden Ansprüche, wobei das eine Vorrichtungsgehäuse (5) vier Sensoren (7) zur Überwachung eines Abstandes (12) zwischen einem Mischwerkzeugsteg (3) oder mindestens einem Mischwerkzeugsteg (3) der mindestens einen Mischwerkzeugstege (3) und der Innenwand (6) des Vorrichtungsgehäuses (5) umfasst, wobei die vier Sensoren (7) um die Werkzeugachse (4) rotationssymmetrisch angeordnet sind und/oder einer der vier Sensoren (7) jeweils eine im Vergleich zu seinen benachbarten Sensoren (7) um 90° gedrehte Messrichtung aufweist, wobei die Messrichtung bevorzugt entlang der Messachse (13) des Sensors (7) verläuft.

5. Vorrichtung nach einem der vorangehenden Ansprüche, wobei die Vorrichtung ein Extruder (1) mit mindestens einem Schneckensteg (3) einer Extruderschnecke (2) ist, wobei mindestens einer der Sensoren (7)
- am Schneckenkopf (10) der Extruderschnecke (2) angeordnet ist
und/oder
- höchstens 50 cm von der Spitze (11) des Schneckenkopfes (10) entfernt angeordnet ist, bevorzugt höchstens 20 cm, und bevorzugt mindestens 5 cm.

6. Verwendung von mindestens zwei Sensoren (7) zur Überwachung eines Abstandes (12) zwischen einem Mischwerkzeugsteg (3) oder mindestens einem Mischwerkzeugsteg (3) der mindestens einen Mischwerkzeugstege (3) und der Innenwand (6) eines Vorrichtungsgehäuses (5) in einer Vorrichtung nach einem der Ansprüche 1 bis 5.

7. Verfahren zur Überwachung eines Abstandes (12) zwischen einem Mischwerkzeugsteg (3) oder mindestens einem Mischwerkzeugsteg (3) der mindestens einen Mischwerkzeugstege (3) und der Innenwand (6) eines Vorrichtungsgehäuses (5) in einer Vorrichtung nach einem der Ansprüche 1 bis 5, umfassend die folgenden Schritte:
A) Bereitstellen oder Herstellen eines Mischwerkzeugs (2),
B) Mischen einer Kautschukmischung mit dem Mischwerkzeug (2) in dem Vorrichtungsgehäuse (5),
C) Einmaliges, mehrmaliges oder kontinuierliches Messen des Abstandes (12) zwischen einem Mischwerkzeugsteg (3) oder mindestens einem Mischwerkzeugsteg (3) der mindestens einen Mischwerkzeugstege (3) und der Innenwand (6) des Vorrichtungsgehäuses (5) während des Mischens einer Kautschukmischung.

8. Verfahren nach Anspruch 7, zusätzlich umfassend den folgenden Schritt:
D) Ausgeben eines Signals, wenn der in Schritt C) gemessene Abstand (12) einen Mindestabstand überschreitet.

## Claims

1. Device for mixing rubber compounds, comprising
- at least one mixing tool (2) with at least one mixing tool web (3) and with a tool axis (4)
and
- a device housing (5) with an inner wall (6),
**characterized in that**
- the one device housing (5) comprises at least two sensors (7) for monitoring a distance (12) between the one mixing tool web (3), or at least one mixing tool web (3) of the at least one mixing tool webs (3), and the inner wall (6) of the device housing (5), wherein the at least two sensors (7) are arranged rotationally symmetrically about the tool axis (4), wherein the one mixing tool web (3) of the one mixing tool (2) is
- a mixing tool web (3) of the last mixing tool (8) before the discharge opening (18) of the device (1)
or
- the last mixing tool web (9) before the discharge opening (18) of the device (1).

2. Device according to Claim 1, wherein the device is a gear pump with at least one mixing tooth of a gear wheel, an extruder (1) with at least one screw flight (3) of an extruder screw (2) or a mixer with at least one rotor web of a rotor.

3. Device according to Claim 1 or 2, wherein at least one of the sensors (7) for monitoring a distance (12) between a mixing tool web (3), or at least one mixing tool web (3) of the at least one mixing tool webs (3), and the inner wall (6) of the device housing (5) is a contactless sensor (7), preferably an ultrasonic sensor or an eddy current sensor.

4. Device according to one of the preceding claims, wherein the one device housing (5) comprises four sensors (7) for monitoring a distance (12) between a mixing tool web (3), or at least one mixing tool web (3) of the at least one mixing tool webs (3), and the inner wall (6) of the device housing (5), wherein the four sensors (7) are arranged rotationally symmetrically around the tool axis (4) and/or one of the four sensors (7) has in each case a measuring direction rotated by 90° in comparison with its neighbouring sensors (7), wherein the measuring direction preferably extends along the measuring axis (13) of the sensor (7).

5. Device according to one of the preceding claims, wherein the device is an extruder (1) with at least one screw flight (3) of an extruder screw (2), wherein at least one of the sensors (7)
- is arranged on the screw head (10) of the extruder screw (2)
and/or
- is arranged at most 50 cm away from the tip (11) of the screw head (10), preferably at most 20 cm, and preferably at least 5 cm.

6. Use of at least two sensors (7) for monitoring a distance (12) between a mixing tool web (3), or at least one mixing tool web (3) of the at least one mixing tool webs (3), and the inner wall (6) of a device housing (5) in a device according to one of Claims 1 to 5.

7. Method for monitoring a distance (12) between a mixing tool web (3), or at least one mixing tool web (3) of the at least one mixing tool webs (3), and the inner wall (6) of a device housing (5) in a device according to one of Claims 1 to 5, comprising the following steps:
A) providing or producing a mixing tool (2),
B) mixing a rubber compound with the mixing tool (2) in the device housing (5),
C) measuring once, more than once or continuously the distance (12) between a mixing tool web (3), or at least one mixing tool web (3) of the at least one mixing tool webs (3), and the inner wall (6) of the device housing (5) during the mixing of a rubber compound.

8. Method according to Claim 7, additionally comprising the following step:
D) outputting a signal if the distance (12) measured in step C) exceeds a minimum distance.

## Revendications

1. Dispositif destiné à mélanger des mélanges de caoutchoucs, ledit dispositif comprenant
- au moins un outil de mélange (2) pourvu d'au moins une ailette d'outil de mélange (3) et d'un axe d'outil (4)
et
- un boîtier de dispositif (5) pourvu d'une paroi intérieure (6),
**caractérisé en ce que**
ledit boîtier de dispositif (5) comprend au moins deux capteurs (7) destinés à surveiller une distance (12) entre ladite ailette d'outil de mélange (3) ou au moins une ailette d'outil de mélange (3) des au moins une ailettes d'outil de mélange (3) et la paroi intérieure (6) du boîtier de dispositif (5), les au moins deux capteurs (7) étant disposés à symétrie de rotation autour de l'axe d'outil (4), ladite ailette d'outil de mélange (3) dudit outil de mélange (2) étant
- une ailette d'outil de mélange (3) du dernier outil de mélange (8) devant l'orifice d'éjection (18) du dispositif (1)
ou
- la dernière ailette d'outil de mélange (9) devant l'ouverture d'éjection (18) du dispositif (1).

2. Dispositif selon la revendication 1, le dispositif étant une pompe à roue dentée pourvue d'au moins une dent de mélange d'une roue dentée, une extrudeuse (1) pourvue d'au moins une ailette de vis sans fin (3) d'une vis sans fin d'extrudeuse (2) ou un mélangeur pourvu d'au moins une ailette d'un rotor.

3. Dispositif selon la revendication 1 ou 2, au moins un des capteurs (7) destinés à surveiller une distance (12) entre une ailette d'outil de mélange (3) ou au moins une ailette d'outil de mélange (3) des au moins une ailettes d'outil de mélange (3) et la paroi intérieure (6) du boîtier de dispositif (5) étant un capteur sans contact (7), de préférence un capteur à ultrasons ou un capteur à courants de Foucault.

4. Dispositif selon l'une des revendications précédentes, ledit boîtier de dispositif (5) comportant quatre capteurs (7) destinés à surveiller une distance (12) entre une ailette d'outil de mélange (3) ou au moins une ailette d'outil de mélange (3) des au moins une ailettes d'outil de mélange (3) et la paroi intérieure (6) du boîtier de dispositif (5), les quatre capteurs (7) étant disposés à symétrie de rotation autour de l'axe d'outil (4) et/ou l'un des quatre capteurs (7) ayant une direction de mesure tournée de 90° par rapport à ses capteurs (7) adjacents, la direction de mesure s'étendant de préférence le long de l'axe de mesure (13) du capteur (7).

5. Dispositif selon l'une des revendications précédentes, le dispositif étant une extrudeuse (1) pourvue d'au moins une ailette de vis sans fin (3) d'une vis sans fin d'extrudeuse (2), au moins un des capteurs (7) étant disposé
- sur la tête de vis sans fin (10) de la vis sans fin d'extrudeuse (2) et/ou
- à 50 cm maximum de la pointe (11) de la tête de vis sans fin (10), de préférence à 20 cm maximum, et de préférence à au moins 5 cm.

6. Utilisation d'au moins deux capteurs (7) destinés à surveiller une distance (12) entre une ailette d'outil de mélange (3) ou au moins une ailette d'outil de mélange (3) des au moins une ailettes d'outil de mélange (3) et la paroi intérieure (6) d'un boîtier de dispositif (5) dans un dispositif selon l'une des revendications 1 à 5.

7. Procédé de surveillance d'une distance (12) entre une ailette d'outil de mélange (3) ou au moins une ailette d'outil de mélange (3) des au moins une ailettes d'outil de mélange (3) et la paroi intérieure (6) d'un boîtier de dispositif (5) dans un dispositif selon l'une des revendications 1 à 5, ledit procédé comprenant les étapes suivantes :
A) fournir ou réaliser un outil de mélange (2),
B) mélanger un mélange de caoutchoucs avec l'outil de mélange (2) dans le boîtier de dispositif (5),
C) mesurer une fois, plusieurs fois ou en continu la distance (12) entre une ailette d'outil de mélange (3) ou au moins une ailette d'outil de mélange (3) des au moins une ailettes d'outil de mélange (3) et la paroi intérieure (6) du boîtier de dispositif (5) pendant le mélange d'un mélange de caoutchoucs.

8. Procédé selon la revendication 7, comprenant en outre l'étape suivante :
D) délivrer un signal si la distance (12) mesurée à l'étape C) dépasse une distance minimale.
